Europäisches Patentamt

(19) European Patent Office

Office européen des brevets

(11) EP 0 748 712 A1

(12) EUROPEAN PATENT APPLICATION

(43) Date of publication:
18.12.1996 Bulletin 1996/51

(51) Int. Cl.$^6$: B60K 15/04, B60R 16/06

(21) Application number: 96108987.7

(22) Date of filing: 05.06.1996

(84) Designated Contracting States:
DE ES FR GB SE

(30) Priority: 14.06.1995 IT TO950496

(71) Applicant: FIAT AUTO S.p.A.
10135 Torino (IT)

(72) Inventors:
• Brunacci, Giuseppe
10142 Torino (IT)

• Di Nunzio, Vittorio
10139 Torino (IT)
• Fiore, Nicola
10154 Torino (IT)

(74) Representative: Quinterno, Giuseppe et al
c/o JACOBACCI & PERANI S.p.A.
Corso Regio Parco, 27
10152 Torino (IT)

(54) A fuel tank for motor vehicles

(57) The tank comprises a container (4) having a filler pipe (5) with a filler (6) of electrically-insulating material which is fixed by means of fixing members (6a, 18; 23, 24) in a hole (7) in a sheet-metal element (8) of the body (9) of the motor vehicle (1) and can house the end nozzle (17) of a metal gun (16) for supplying the fuel (3) at a filling station (10). At least a portion of the filler (6) which is intended to contact the nozzle (17) of a fuel-supply gun (16) is made of an electrically-conductive plastics material. This portion of the filler (6) is connected to the fixing members (6a, 18; 23, 24) which are made at least partly of an electrically-conductive polymeric material so that, when the tank is in the fitted condition, this portion of the filler (6) is connected electrically to the motor-vehicle body (9) and the electrical resistance between the nozzle (17) of a fuel-supply gun and the motor-vehicle bodywork (9) is substantially equal to or less than 100 Mohms.

FIG. 4

EP 0 748 712 A1

Printed by Rank Xerox (UK) Business Services
2.13.9/3.4

## Description

The present invention relates to a fuel tank for motor vehicles.

More specifically, the subject of the invention is a fuel tank comprising a container having a filler pipe with an end filler of electrically-insulating material which, when the tank is in the fitted condition, is fixed by fixing means in a hole provided in a sheet-metal element of the body of the motor vehicle and can house the end nozzle of a metal gun for supplying the fuel at a filling station.

With tanks of this type, there have been cases of burning of the mixture of air and fuel vapour which forms close to the filler of the tank during filling-up operations.

These problems are described, for example in the publication SAE No. 1645 of February 1994.

Attention is also drawn to these potential problems in the publication NFPA 77 (National Fire Protection Association) and in "API Recommended Practice 2003" of the United States Safety and Fire Protection Department.

The phenomenon of the burning of the air/petrol-vapour mixture has been explained qualitatively as follows.

During the filling-up of a tank at a filling station, there is a rapid and swirling flow of fuel (petrol) through an insulating section of hose with a metal supply gun at its end. During the flow through this hose, charges of a certain polarity, for example, of negative polarity, are adsorbed by the walls of the hose whilst charges of the opposite sign, for example, positive charges form in the liquid stream of fuel and are transported in to the motor-vehicle tank.

As a result, an electric charge of a certain sign accumulates in the vehicle's tank. If the vehicle which contains the tank is insulated from the earth, all of its metal parts, and hence also the bodywork, are brought to a certain voltage level relative to the tank because of electrical conduction or induction phenomena between the tank and the metal mass of the vehicle.

An electric charge having a lower absolute value than the electric charge accumulated in the tank and having the opposite sign to this charge becomes localized on the end nozzle of the fuel-supply gun.

A potential difference is therefore generated between the supply gun and the motor vehicle and, in the worst case, is equal to the sum of the potential difference between the tank and the earth and the potential difference between the supply gun and the earth.

As a result of this potential difference, a spark may be struck and, in the presence of an air/petrol-vapour mixture, may lead to a fire/explosion in the region adjacent the filler of the tank.

To prevent this problem, some manufacturers have adopted the solution of the provision of a bush or other metal element connected to the mass of the motor vehicle in the filler of the fuel-tank. This bush or other element is arranged so as to contact the end nozzle of the fuel-supply gun in a filling station.

However, this solution is complicated from the point of view of its construction and implementation and there may also be sealing problems in view of the strict standards already in force relating to the limitation of fuel evaporation and problems may arise as a result of the contact of seals with metal parts which may be subject to abrasion by fuel-supply guns when they are inserted in the filler of the tank in order to fill it.

The object of the present invention is to provide a solution to the problem described above which is simpler than known solutions from the point of view of its construction and implementation.

This object is achieved, according to the invention, by a fuel tank of the type specified above, characterized in that at least a portion of the filler which is intended to contact the end nozzle of a fuel-supply gun is made of an electrically-conductive plastics material, the said portion of the filler being connected to the fixing means which are made at least partly of an electrically-conductive polymeric material so that, when the tank is in the fitted condition, the said portion of the filler is connected electrically to the motor-vehicle body, the said portion of the filler and the associated fixing means being formed in a manner such that, when the nozzle of a fuel-supply gun is inserted in and is in contact with the said portion of the filler, the electrical resistance between the nozzle and the motor-vehicle bodywork is substantially equal to or less than 100 Mohms.

Further characteristics and advantages of the invention will become clear from the following detailed description, given purely by way of non-limiting example with reference to the appended drawings, in which:

Figure 1 shows a motor vehicle with a tank according to the prior art, in the course of a filling-up operation,

Figure 2 shows a detail indicated II in Figure 1, on an enlarged scale,

Figure 3 is an electrical diagram useful for an understanding of the mechanism of the possible generation of sparks between a fuel-supply gun and the body of a motor vehicle, and

Figures 4 and 5 are two sectioned views which show two different embodiments of fuel-tank fillers according to the invention.

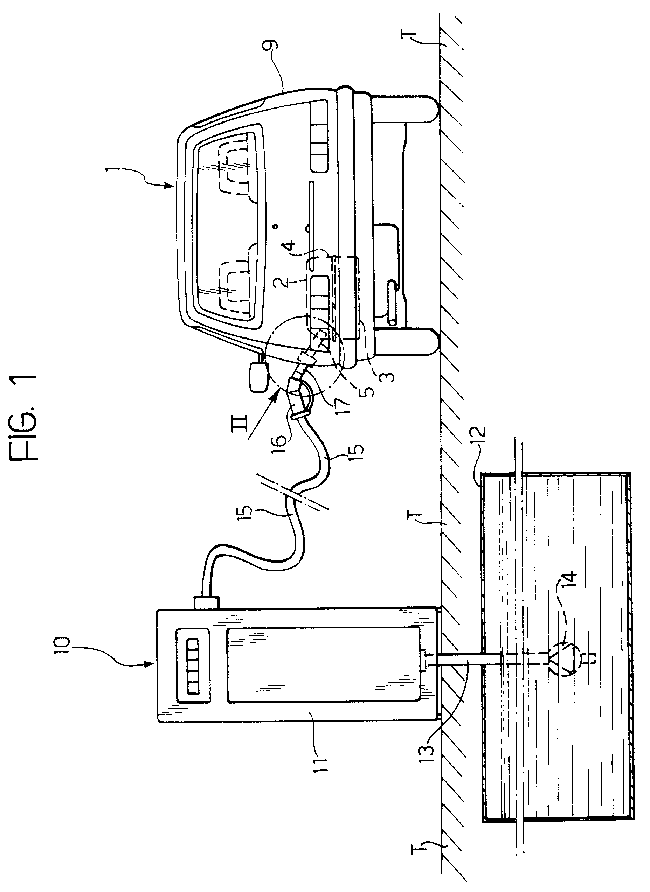

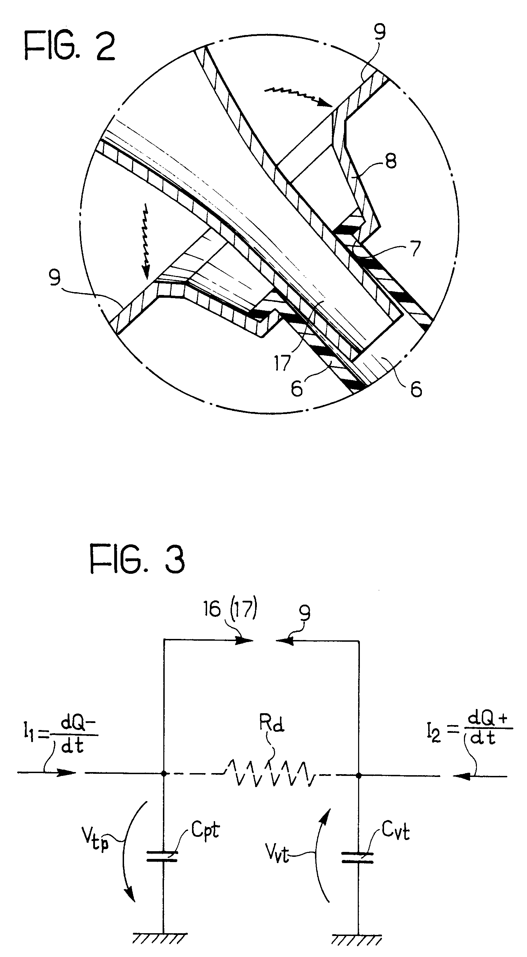

In Figure 1, a motor vehicle, particularly a motor car, generally indicated 1, has a tank 2 for the fuel 3. The tank comprises a container 4 of electrically-insulating material, particularly plastics material, forming a filler pipe 5 with an end filler 6 (Figure 2). The filler 6 is fixed in a hole 7 (Figure 2) provided in a sheet-metal element 8 of the motor-vehicle body 9.

Figure 1 also shows schematically a filling station 10.

In the embodiment shown by way of example, the station comprises a pillar 11 connected to an underground tank 12 by means of a suction pipe 13 which is associated, in known manner, with a submerged pump 14.

The fuel 3 drawn from the underground tank 12 is supplied to the tank 4 of the motor vehicle 1 through a hose 15 connected to the pillar 11 and made, for example, of elastomeric material. A metal fuel-supply gun 16 is connected to the distal end of this hose 15, in known manner. This gun has at its end a nozzle 17 which is inserted in the filler 6 of the vehicle tank 4 (see also Figure 2).

During filling-up with fuel, electrical charges of a certain polarity, for example, negative charges, may be adsorbed by the walls of the hose 15 connected to the supply gun 16. Charges of the opposite sign, for example, positive charges are transported into the vehicle tank 4 by the stream of fuel. An electric charge therefore accumulates in the tank. A charge of the opposite sign to that accumulated in the tank 4, on the other hand, becomes localized on the metal fuel-supply gun 16. The charge accumulated in the tank may be considered, as a first approximation, to be distributed over the entire metal body of the motor vehicle either by conduction or by induction.

If, as in Figure 3, the electrical capacitance between the supply gun 16 and the earth and the capacitance between the vehicle body 9 and the earth T are indicated $C_{pt}$ and $C_{vt}$, respectively, the gun 16 tends to be brought to a potential, relative to the earth, of

$$V_{tp} = Q- / C_{pt}$$

and the vehicle body tends to be brought to a potential of

$$V_{vt} = Q+ / C_{vt}$$

in which Q- and Q+ indicate the charges which are localized on the supply gun and on the car, respectively.

A potential difference is thus generated between the fuel-supply gun and the motor-vehicle bodywork and, in the worst case, is equal to the sum of the two potential differences given above, that is:

$$V_{vp} = V_{vt} + V_{tp}$$

Sparks may then be struck between the fuel-supply gun and the motor-vehicle body 9, as indicated symbolically by the serrated arrows in Figure 2 and, in the presence of an air/petrol-vapour mixture may lead to a fire/explosion in the region adjacent the filler 6 of the vehicle tank.

Figure 3 shows a simplified electrical model of the phenomena described above; the supply gun 16 and, in particular, its nozzle 17, and the bodywork 9 together form a kind of discharger or spark gap. The charge Q- which accumulates on the nozzle 17 of the gun corresponds to the injection of a current $I_1 = dQ- / dt$, and the charge Q+ which accumulates on the motor vehicle corresponds to the injection of a current $I_2 = dQ+ / dt$, t being time.

Between the fuel-supply nozzle 17 and the motor-vehicle body 9 there is a resistance $R_d$ which theoretically is infinite but, in fact, is finite. This resistance may thus allow a current to pass between the nozzle 17 and the motor-vehicle body 9, which are at different potentials and the lower the resistance $R_d$ is, the more this current tends to bring these elements to the same potential.

It has been found from theoretical studies and experimental observations carried out by the inventors that, if the resistance $R_d$ is substantially equal to or less than 100 Mohms, electrical sparking between the fuel-supply gun 16 and the motor-vehicle body 9 is, in practice, avoided.

Correspondingly, according to the invention, the filler of the motor-vehicle tank 4 is formed and is connected to the bodywork 9 of the motor vehicle in a manner such that the electrical resistance between the nozzle of a fuel-supply gun and the bodywork of the motor vehicle during a filling-up operation is substantially equal to or less than 100 Mohms.

According to the invention, this is achieved in the following manner.

At least a portion of the filler 6 of the motor-vehicle tank 4 which is intended to contact the end nozzle 17 of a fuel-supply gun 16 is made of an electrically-conductive plastics material. This portion of the filler 6 is then connected to the bodywork 9 of the motor vehicle by means of fixing devices which are at least partly made of an electrically-conductive polymeric material so that, when the tank 4 is in the fitted condition, the electrically-conductive portion of the filler 6 is connected electrically to the motor-vehicle body 9.

The resistivity of the electrically-conductive plastics/polymeric materials used and the geometrical shapes of the electrically conductive portion of the filler 6 and of the associated means for fixing to the body are designed, by known criteria, in a manner such that, when the nozzle of a fuel-supply gun is inserted in and in contact with the electrically-conductive portion of the filler, the electrical resistance between the nozzle and the motor-vehicle bodywork is substantially equal to or less than 100 Mohms.

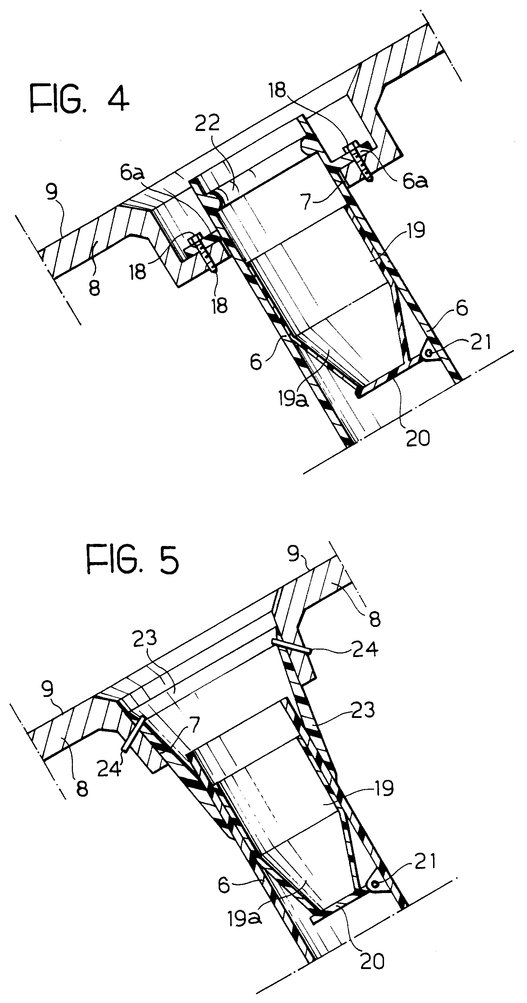

Figure 4 shows a first embodiment in which the filler 6 of the tank 4 is made entirely of an electrically-conductive plastics material. The end portion of this filler has a pair of integral tabs 6a also of electrically-conductive plastics material, for the fixing of the filler in the hole 7 in the motor-vehicle body 9 by means of screws 18 of conductive material. A kind of plate valve may be provided in the filler 6 of the tank 4 (as is now usual in the most recent motor cars), the valve including a tubular element 19 fixed in the filler and having a frusto-conical portion 19a the end rim of which acts as a valve seat with which a plate obturator 20 articulated to the wall of the filler 6 at 21 can cooperate. The tubular element 19 and the plate obturator 20 are advantageously also made of an electrically-conductive plastics material.

As shown in Figure 4, the end of the filler 6 may have an integral internal annular projection 22, also of electrically-conductive plastics material, which is intended to contact the end nozzle of the fuel-supply gun.

In the variant shown in Figure 5, the filler 6 of the tank 4 is also made of electrically-conductive plastics material and is fixed in the hole 7 provided in the motor-vehicle bodywork 9 by means of a frusto-conical connector element 23. This connector is conveniently made of an electrically-conductive elastomeric material and, in the embodiment shown by way of example, is fixed in the hole 7 in the body 9 by means of pins 24 or similar fixing devices made of electrically-conductive material. The tapered end of the connector 23 is force-fitted on the end of the filler.

A plate valve of the type already described above with reference to Figure 4 may also be provided in the embodiment of Figure 5.

Naturally, the principle of the invention remaining the same, the forms of embodiment and details of construction may be varied widely with respect to those described and illustrated purely by way of non-limiting example, without thereby departing from the scope of the present invention as defined in the appended claims.

**Claims**

1. A fuel tank for motor vehicles, comprising a container (4) having a filler pipe (5) with an end filler (6) of electrically-insulating material which, when the tank is in the fitted condition, is fixed by fixing means (6a, 18; 23, 24) in a hole (7) provided in a sheet-metal element (8) of the body (9) of the motor vehicle (1) and can house the end nozzle (17) of a metal gun (16) for supplying the fuel (3) at a filling station (10),
characterized in that at least a portion of the filler (6) which is intended to contact the end nozzle (17) of a fuel-supply gun (16) is made of an electrically-conductive plastics material, the said portion of the filler (6) being connected to the fixing means (6a, 18; 23, 24) which are made at least partly of an electrically-conductive polymeric material so that, when the tank is in the fitted condition, the said portion of the filler (6) is connected electrically to the motor-vehicle body (9), the said portion of the filler (6) and the associated fixing means (6a, 18; 23, 24) being formed in a manner such that, when the nozzle (17) of a fuel-supply gun (16) is inserted in and is in contact with the said portion of the filler (6), the electrical resistance between the nozzle (17) and the motor-vehicle bodywork (9) is substantially equal to or less than 100 Mohms.

FIG. 1

# FIG. 2

# FIG. 3

$$I_1 = \frac{dQ-}{dt}$$

$$R_d$$

$$I_2 = \frac{dQ+}{dt}$$

$$16\,(17)$$

$$9$$

$$V_{tp} \quad C_{pt}$$

$$V_{vt} \quad C_{vt}$$

FIG. 4

FIG. 5

EP 0 748 712 A1

**European Patent Office**

**EUROPEAN SEARCH REPORT**

Application Number
EP 96 10 8987

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 011, no. 301 (M-628), 30 September 1987 & JP-A-62 091317 (SHOWA DENKO KK), 25 April 1987, * abstract * | 1 | B60K15/04 B60R16/06 |
| X | GB-A-2 255 554 (ITALIANA SERRATURE TORINO) 11 November 1992 * page 4, last paragraph - page 5, paragraph 1; figure 1 * | 1 | |
| X | US-A-4 946 060 (SHERWOOD CARL H  ET AL) 7 August 1990 * column 3, line 4 - line 41; figures 1,3 * | 1 | |
|  |  |  | TECHNICAL FIELDS SEARCHED    (Int.Cl.6) |
|  |  |  | B60K B60R |

The present search report has been drawn up for all claims

| Place of search | Date of completion of the search | Examiner |
|---|---|---|
| BERLIN | 23 September 1996 | Wiberg, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)